(19) Europäisches Patentamt
European Patent Office
Office européen des brevets

(11) **EP 3 189 389 B1**

(12) **FASCICULE DE BREVET EUROPEEN**

(45) Date de publication et mention de la délivrance du brevet:
**08.09.2021 Bulletin 2021/36**

(51) Int Cl.:
***G05D 1/02*** *(2020.01)*

(21) Numéro de dépôt: **15763237.3**

(86) Numéro de dépôt international:
**PCT/EP2015/069787**

(22) Date de dépôt: **28.08.2015**

(87) Numéro de publication internationale:
**WO 2016/034516 (10.03.2016 Gazette 2016/10)**

(54) **DISPOSITIF DE LOCALISATION ET DE CARTOGRAPHIE ET PROCÉDÉ ASSOCIÉ**

LOKALISIERUNGS- UND KARTOGRAPHIEVORRICHTUNG MIT ENTSPRECHENDEN VERFAHREN

LOCATION AND MAPPING DEVICE WITH ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2014 FR 1401938**

(43) Date de publication de la demande:
**12.07.2017 Bulletin 2017/28**

(73) Titulaire: **Valeo Schalter und Sensoren GmbH 74321 Bietigheim-Bissingen (DE)**

(72) Inventeurs:
 • **TREHARD, Guillaume**
  **F-94046 Créteil Cedex (FR)**
 • **POLLARD, Evangeline**
  **F-94046 Créteil Cedex (FR)**
 • **NASHASHIBI, Fawzi**
  **F-94046 Créteil Cedex (FR)**
 • **BRADAI, Benazouz**
  **F-94046 Créteil Cedex (FR)**

(74) Mandataire: **Claassen, Maarten Pieter et al Valeo Schalter und Sensoren GmbH CDA-IP Laiernstraße 12 74321 Bietigheim-Bissingen (DE)**

(56) Documents cités:
 • BAIG Q ET AL: "Online localization and mapping with moving objects detection in dynamic outdoor environments", INTELLIGENT COMPUTER COMMUNICATION AND PROCESSING, 2009. ICCP 2009. IEEE 5TH INTERNATIONAL CONFERENCE ON, IEEE, PISCATAWAY, NJ, USA, 27 août 2009 (2009-08-27), pages 401-408, XP031545073, ISBN: 978-1-4244-5007-7 cité dans la demande
 • JULIEN MORAS ET AL: "Credibilist occupancy grids for vehicle perception in dynamic environments", ROBOTICS AND AUTOMATION (ICRA), 2011 IEEE INTERNATIONAL CONFERENCE ON, IEEE, 9 mai 2011 (2011-05-09), pages 84-89, XP032034119, DOI: 10.1109/ICRA.2011.5980298 ISBN: 978-1-61284-386-5 cité dans la demande
 • BOLZON B ET AL: "Experimental study of data merging techniques for workspace modeling with uncertainty", ADVANCED METHODS FOR UNCERTAINTY ESTIMATION IN MEASUREMENT, 2005. PROC EEDINGS OF THE 2005 IEEE INTERNATIONAL WORKSHOP ON NIAGARA FALLS, ONTARIO, CANADA 13 MAY 2005, PISCATAWAY, NJ, USA,IEEE, 13 mai 2005 (2005-05-13), pages 14-19, XP010893989, ISBN: 978-0-7803-8979-3
 • **None**

**Description**

DOMAINE TECHNIQUE AUQUEL SE RAPPORTE L'INVENTION

La présente invention concerne les techniques de localisation et de cartographie utilisées par un engin mobile dans un environnement.

Elle concerne plus particulièrement un dispositif et un procédé de localisation et de cartographie destiné à équiper un tel engin mobile.

L'invention s'applique particulièrement avantageusement dans le cas où un capteur délivre des données de positionnement d'obstacles relativement à l'engin mobile.

ARRIERE-PLAN TECHNOLOGIQUE

On connaît des dispositifs de localisation et de cartographie conçus pour équiper un engin mobile (par exemple un robot) afin à la fois de localiser l'engin mobile dans son environnement et de produire une cartographie de cet environnement.

De tels dispositifs sont couramment dénommés SLAM, en référence à l'acronyme anglo-saxon pour *"Simultaneous Localization And Mapping"*.

Ils sont en général basés sur une approche probabiliste. Dans certaines solutions par exemple, on détermine, en fonction de données fournies par un capteur, la probabilité d'occupation de chacune des cellules d'une grille qui recouvre l'environnement. On peut se référer à ce sujet à l'article *"Online localization and mapping with moving objects detection in dynamic outdoor environments"*, in IEEE 5th Internation Conférence on Intelligent Computer Communication and Processing, 2009, ICCP 2009, 2009, pp. 410-408 ainsi qu'à l'article *"Experimental study of data merging techniques for workspace modeling with uncertainty"* par B. Bolzon et F. Payeur publié dans les "Proceedings of the 2005 IEEE International Workshop on Advanced Methods for Uncertainty Estimation in Measurement" Niagara Falls, Ontario, Canada du 13 mai 2005 pp. 14-19. L'article *"Credibilist occupancy grids for vehicle perception in dynamic environments"* de J. Moras publié dans la IEEE INTERNATIONAL CONFERENCE ON ROBOTICS AND AUTOMATION de 2011 décrit un procédé de localisation et de cartographie des objets fixes ou mobiles dans l'environnement d'un véhicule reposant sur la fusion des mesures d'un Lidar, les mesures étant utilisées pour construire une carte d'occupation de l'environnement selon une approche "crédibiliste", l'occupation d'une cellule de terrain pouvant avoir les quatre valeurs de "non-occupée", "occupée", "inconnu" ou "résultant d'un conflit".

OBJET DE L'INVENTION

Dans ce contexte, la présente invention propose un dispositif conformément à la revendication 1.

Ainsi, la position de l'engin mobile est déterminée par recherche de la meilleure correspondance entre les valeurs de mesure, générées sur la base des données de positionnement reçues d'un capteur à un instant donné, et les valeurs construites, qui décrivent la cartographie élaborée par le dispositif aux itérations précédentes.

Ces valeurs ne se limitent pas toutefois à évaluer, comme les approches probabilistes classiques, la probabilité de présence ou d'absence d'un obstacle dans les différentes zones de l'environnement, mais tiennent compte en outre de l'absence d'information pour certaines zones, grâce aux valeurs représentatives de la vraisemblance de non-connaissance de ces zones.

On remarque d'ailleurs que les valeurs représentatives de la vraisemblance d'occupation d'une zone et de la vraisemblance de non-occupation d'une zone sont elles aussi influencées par l'absence d'information pour la zone concernée puisqu'on prévoit en général que les trois valeurs représentatives précitées (vraisemblance d'occupation, vraisemblance de non-occupation et vraisemblance de non-connaissance), dénommées *"masses"* dans la description qui suit, ont une somme fixe (en général égale à 1).

Selon d'autres caractéristiques optionnelles (et donc non limitatives) :

- la mesure de correspondance est indicative d'une correspondance entre une répartition spatiale des valeurs de mesure représentatives de la vraisemblance d'occupation et une répartition spatiale des valeurs construites représentatives de la vraisemblance d'occupation ;
- le module de localisation est conçu pour déterminer la mesure de correspondance pour un positionnement donné de l'engin mobile en utilisant une somme de termes associés chacun à une zone donnée de l'environnement, et pour calculer chaque terme en utilisant le produit de la valeur de mesure représentative de la vraisemblance d'occupation de la zone correspondant à la zone donnée pour le positionnement donné de l'engin et de la valeur construite représentative de la vraisemblance d'occupation de la zone donnée ;
- le module de localisation est conçu pour calculer chaque terme en divisant le produit précité par un facteur de conflit utilisant une somme de la valeur de mesure représentative de la vraisemblance d'occupation de la zone correspondant à la zone donnée pour le positionnement donné de l'engin, multipliée par la valeur construite représentative de la vraisemblance de non-occupation de la zone donnée, et de la valeur de mesure représentative de la vraisemblance de non-occupation de la zone correspondant à la zone donnée pour le positionnement donné de l'engin, multipliée par la valeur construite représentative de la vraisemblance d'occupation de la zone donnée ;

- le module de cartographie comprend un module de combinaison conçu pour déterminer pour chaque zone, en combinant lesdites valeurs de mesure relatives à la zone concernée et des valeurs construites par le module de cartographie pour la zone concernée lors d'une précédente itération, des valeurs brutes respectivement représentatives d'une vraisemblance d'occupation de la zone concernée, d'une vraisemblance de non-occupation de la zone concernée, d'une vraisemblance de non-connaissance de la zone concernée et d'une vraisemblance de conflit sur la zone concernée ;

- le module de cartographie comprend un module de normalisation conçu pour déterminer lesdites valeurs construites en fonction desdites valeurs brutes ;

- le module de traitement comprend un module de conversion conçu pour déterminer, pour chaque zone de la pluralité de zones positionnées par rapport à l'engin, lesdites valeurs de mesure relatives à la zone concernée en fonction de valeurs correspondantes attribuées, dans une grille polaire, à une cellule correspondant à la zone concernée.

L'invention propose également un système comprenant un dispositif de localisation et de cartographie comme mentionné ci-dessus et un capteur conçu pour générer lesdites données de positionnement. Ce capteur est par exemple un lidar, mais il pourrait s'agir d'un autre type de capteur, par exemple un radar.

L'invention propose de façon corrélative un procédé de localisation et de cartographie utilisé par un engin mobile dans un environnement comprenant une pluralité de zones, conformément à la revendication 10.

Ce procédé peut éventuellement comprendre en outre une étape de combinaison desdites valeurs de mesure relatives à la zone concernée et de valeurs construites par le module de cartographie pour la zone concernée lors d'une précédente itération afin de générer des valeurs brutes respectivement représentatives d'une vraisemblance d'occupation de la zone concernée, d'une vraisemblance de non-occupation de la zone concernée, d'une vraisemblance de non-connaissance de la zone concernée et d'une vraisemblance de conflit sur la zone concernée.

Les caractéristiques optionnelles présentées ci-dessus relative au dispositif de localisation et de cartographie peuvent également s'appliquer à de tels procédés.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un système comprenant un capteur et un exemple de dispositif de localisation et de cartographie conforme à l'invention ;
- la figure 2 représente sous forme fonctionnelle les traitements effectués par le dispositif de localisation et de cartographie de la figure 1 ;
- la figure 3 représente une grille polaire construite à partir des données de positionnement reçues du capteur.

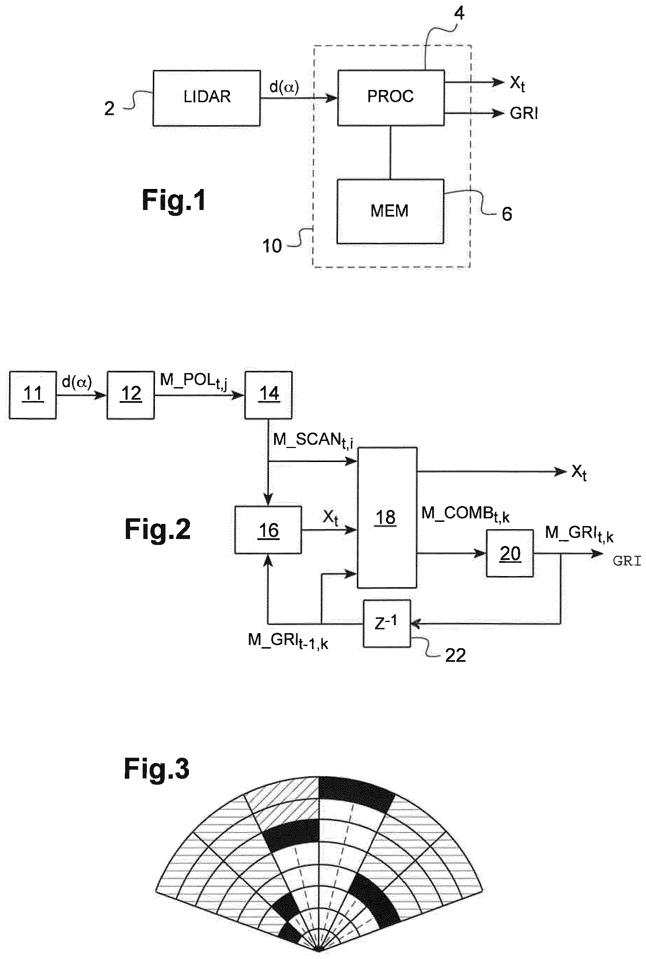

La figure 1 représente schématiquement les éléments principaux d'un système incluant un dispositif de localisation et de cartographie 10.

Un tel système équipe un engin mobile dans un environnement, par exemple un véhicule automobile ou un robot. Comme cela ressortira de la description qui suit, un système équipé d'un dispositif de localisation et de cartographie, parfois dénommé SLAM (acronyme anglo-saxon signifiant *"Simultaneous Localisation And Mapping"*), permet à la fois la localisation du système (et donc de l'engin mobile) dans l'environnement et la découverte de la cartographie de l'environnement.

Le système de la figure 1 comprend un capteur 2 qui génère des données de positionnement (relativement au système) d'obstacles présents dans l'environnement. Le capteur 2 est par exemple de type lidar ; dans ce cas, les données de positionnement sont représentatives, pour une pluralité d'orientations $\alpha$ par rapport à une direction de référence du système, de la distance $d(\alpha)$ (par rapport au système) du premier obstacle rencontré dans la direction associé à cette orientation a.

On pourrait en variante utiliser un capteur d'un autre type, par exemple un radar.

Le système de la figure 1 comprend également le dispositif de localisation et de cartographie 10, qui reçoit en entrée les données de positionnement générées par le capteur 2 et génère en sortie des informations de localisation $X_t$ du système (et donc de l'engin mobile équipé du système) à chaque instant t et des informations de cartographie GRI.

Ces informations de cartographie GRI sont par exemple une grille d'occupation (en anglais *"occupancy grid"*) qui décrit, sous forme de grille, les lieux de l'environnement dans lesquels un obstacle a été détecté.

Dans le cas décrit ici où l'environnement est cartographié en 2 dimensions, les informations de localisation $X_t$ comprennent par exemple les coordonnées x,y du système dans le plan de cartographie (précisément son abscisse x et son ordonnée y) et son cap $\theta$ (en anglais *"heading"*). Ces informations de localisation X sont déterminées comme décrit ci-dessous par rapport à des coordonnées initiales $x_0,y_0$ et un cap initial $\theta_0$ définis par convention (on prend par exemple $x_0 = 0$ ; $y_0 = 0$ ; $\theta_0 = 0$).

Afin de mettre en œuvre les traitements décrits ci-dessous, le dispositif de localisation et de cartographie 10 comprend ici un processeur 4 (par exemple un microprocesseur) et un moyen de mémorisation 6 (par exemple un disque dur).

Le processeur 4 est conçu pour mettre en œuvre les traitements décrits ci-dessous, notamment en référence à la figure 2, par exemple du fait de l'exécution d'instructions de programme d'ordinateur mémorisées dans les moyens de mémorisation 6. En variante, ces traitements pourraient être effectués par un circuit intégré à application spécifique (ou ASIC de l'anglais *"Application Specific Integrated Circuit"*) implanté dans le dispositif de localisation et de cartographie 10.

Les moyens de mémorisation 6 permettent par ailleurs la mémorisation des données utilisées lors du traitement décrit ci-après, notamment les données représentatives de vraisemblances ou crédibilités, dénommées *"masses"* dans la suite.

La figure 2 représente sous forme fonctionnelle les traitements effectués par le dispositif de localisation et de cartographie 10 afin de déterminer les informations de localisation $X_t$ et les informations de cartographie GRI à partir des données de positionnement $d(\alpha)$ générées par le capteur 2.

Ainsi, les différents traitements réalisés par le dispositif de localisation et de cartographie 10 sont représentés sur la figure 2 mis en œuvre par différents modules 11, 12, 14, 16, 18, 20, 22 bien que ceux-ci puissent être mis en œuvre en pratique du fait de l'exécution d'instructions par le même processeur 4.

Le dispositif de localisation et de cartographie 10 comprend un module de réception 11 connecté au capteur 2 et qui reçoit ainsi les données de positionnement $d(\alpha)$ générées par le capteur 2 et les transmet à un module de construction de grille polaire 12.

En fonction des données de positionnement $d(\alpha)$ qu'il reçoit en entrée à un instant t, le module de construction de grille polaire 12 détermine, pour chacune des cellules j d'une grille polaire, les trois paramètres suivants :

- une masse d'occupation $M\_POL_{t,j}(O)$ (en anglais *"occupation mass"*) ;
- une masse de non-occupation $M\_POL_{t,j}(F)$ (en anglais *"free mass"*) ;
- une masse de non-connaissance $M\_POL_{t,j}(U)$ (en anglais *"unknown mass"*).

Pour chaque cellule j, la somme des différentes masses relatives à cette cellule est égale à 1.

Comme représenté en figure 3, une grille polaire est un ensemble de cellules de l'environnement (ici représenté en deux dimensions) dans lequel chaque cellule correspond à une plage donnée de distances au système (précisément au capteur 2) et à un secteur angulaire donné (les angles étant mesurés par rapport à la direction de référence du système déjà mentionnée).

La masse d'occupation $M\_POL_{t,j}(O)$ représente la possibilité que la cellule j concernée dans la grille polaire soit occupée, d'après certaines informations, ici les données de positionnement reçues du capteur 2 à l'instant t. La masse d'occupation $M\_POL_{t,j}(O)$ est donc représentative d'une vraisemblance ou crédibilité d'occupation de cette cellule j.

La masse de non-occupation $M\_POL_{t,j}(F)$ représente la possibilité que la cellule j concernée dans la grille polaire soit vide, d'après certaines informations, ici les données de positionnement reçues du capteur 2 à l'instant t. La masse de non-occupation $M\_POL_{t,j}(F)$ est donc représentative d'une vraisemblance ou crédibilité de non-occupation de cette cellule j.

La masse de non-connaissance $M\_POL_{t,j}(U)$ représente la possibilité que la cellule j concernée n'ait pas été explorée, c'est-à-dire qu'aucune connaissance ne soit disponible pour cette cellule j d'après les informations disponibles (ici les données de positionnement). La masse de non-connaissance $M\_POL_{t,j}(U)$ est donc représentative d'une vraisemblance ou crédibilité de non-connaissance de la cellule j.

Pour les cellules j situées dans le secteur angulaire correspondant à une direction $\theta$, on détermine par exemple comme suit les différentes masses :

- pour la cellule j (noircie en figure 3) située à une distance $d(\theta)$ du système (c'est-à-dire, dans le cas où le capteur 2 est un lidar, celle où un objet a été impacté par le laser représenté en pointillés en figure 3), $M\_POL_{t,j}(O) = I_{CONF}$, $M\_POL_{t,j}(F) = 0$, $M\_POL_{t,j}(U) = 1- I_{CONF}$, où $I_{CONF}$ est un indice de confiance du capteur 2 (par exemple prédéfini ou délivré par le capteur 2), typiquement compris entre 0,5 et 1 ;

- pour les cellules j situées à une distance inférieure à la distance d(θ) (c'est-à-dire celles traversées par le laser dans le cas du lidar),

$$M\_POL_{t,j}(O) = 0, \ M\_POL_{t,j}(F) = I_{CONF}, \ M\_POL_{t,j}(U) = 1 - I_{CONF} \ ;$$

- pour les cellules j situées à une distance supérieure à la distance d(θ) (c'est-à-dire celles situées au-delà de l'impact du laser dans le cas du lidar, représentées hachurées en figure 3),

$$M\_POL_{t,j}(O) = 0, \ M\_POL_{t,j}(F) = 0, \ M\_POL_{t,j}(U) = 1.$$

Lorsque le capteur délivre plusieurs données de positionnement d(θ) pour un même secteur angulaire de la grille polaire (par exemple lorsque le lidar délivre des données pour plusieurs altitudes ou couches, ou lorsque la résolution du lidar est plus fine que celle de la grille polaire), on retient par exemple la distance d(θ) la plus faible pour la détermination des masses telle que décrite ci-dessus.

Le module de construction de grille polaire 12 transmet l'ensemble des paramètres de masse $M\_POL_{t,j}$ ainsi déterminés à un module de conversion 14 qui attribue, pour chaque cellule j de la grille polaire, les masses déterminées pour cette cellule j à une (ou plusieurs) cellule(s) correspondante(s) i d'une grille de mesure en coordonnées cartésiennes (exprimées relativement à la position actuelle du système à l'instant t).

Autrement dit, pour tout A∈{O,F,U}, $M\_SCAN_{t,i}(A) = M\_POL_{t,j}(A)$ lorsque la cellule i de la grille de mesure correspond à la cellule j de la grille polaire.

On définit ainsi pour chaque cellule i de la grille de mesure :

- une masse d'occupation $M\_SCAN_{t,i}(O)$ pour la cellule i, représentant la vraisemblance (ou crédibilité) d'occupation de la cellule i (d'après les données de positionnement fournies par le capteur 2 à l'instant t) ;
- une masse de non-occupation $M\_SCAN_{t,i}(F)$ pour la cellule i, représentant la vraisemblance de non-occupation de la cellule i (d'après les données de positionnement fournies par le capteur 2 à l'instant t) ;
- une masse de non-connaissance $M\_SCAN_{t,i}(U)$ pour la cellule i, représentant la vraisemblance de non-connaissance de la cellule i (d'après les données de positionnement fournies par le capteur 2 à l'instant t).

Pour chaque cellule i, la somme des différentes masses relatives à cette cellule est égale à 1.

On dénomme ici *"module de traitement"* l'ensemble formé par le module de construction de grille polaire 12 et le module de conversion 14. Le module de traitement permet ainsi de déterminer les masses $M\_SCAN_{t,j}(A)$ à partir des données de positionnement d(θ).

Comme visible en figure 2, les différentes masses $M\_SCAN_{t,i}(A)$ (avec A∈{O,F,U}) produites par le module de conversion 16 pour les différentes cellules i de la grille de mesure sont transmises d'une part à un module de localisation 16 et d'autre part à un module de combinaison 18.

Le module de localisation 16 reçoit également en entrée les informations suivantes, produites par le module de combinaison 18 et le module de normalisation 20 à l'itération précédente t-1 (comme expliqué ci-après pour l'itération courante t) et relatives aux cellules k d'une grille représentant l'environnement (en coordonnées cartésiennes par rapport à une référence fixe, telle que la position initiale du système) :

- pour chaque cellule k, une masse d'occupation $M\_GRI_{t-1,k}(O)$, représentant la vraisemblance d'occupation de la cellule k, construite par le dispositif 10 du fait du traitement effectué jusqu'à l'instant t-1 ;
- pour chaque cellule k, une masse de non-occupation $M\_GRI_{t-1,k}(F)$, représentant la vraisemblance de non-occupation de la cellule k, construite par le dispositif 10 du fait du traitement effectué jusqu'à l'instant t-1 ;
- pour chaque cellule k, une masse de non-connaissance $M\_GRI_{t-1,k}(U)$, représentant la vraisemblance de non-connaissance de la cellule k, construite par le dispositif 10 du fait du traitement effectué jusqu'à l'instant t-1.

On remarque que ces informations ne sont pas disponibles lors de la première itération. Aucun traitement n'est toutefois nécessaire lors de cette première itération : le module de localisation 16 indique seulement alors que la position courante (définie par les coordonnées x,y et le cap θ) est égale à la position initiale déjà mentionnée (définie par les coordonnées $x_0$, $y_0$ et par le cap $θ_0$).

Pour les autres itérations, le module de localisation 16 détermine la position $X_t$ du système (et donc de l'engin mobile), définie ici par les coordonnées x, y et le cap θ, qui maximise une mesure de correspondance entre les valeurs associées à la grille de mesure (localisée par rapport à la position du système) et les valeurs associées à la grille fixe représentant l'environnement.

On utilise par exemple la mesure suivante pour ce faire, définie pour une position Z par :

$$N(Z) = \sum_k \frac{M\_GRI_{t-1,k}(O).M\_SCAN_{t,i(k,Z)}(O)}{1 - M_{t,k,Z}(C)}$$

où i(k,Z) est la cellule de la grille de mesure (positionnée relativement au système, c'est-à-dire à l'engin mobile comme déjà indiqué) correspondant à la cellule k de la grille fixe lorsque le système a la position Z et où $M_{t,k,z}(C)$ mesure le conflit entre les informations utilisées au numérateur :

$$M_{t,k,z}(C) = M\_GRI_{t-1,k}(F).M\_SCAN_{t,i(k,Z)}(O) + M\_GRI_{t-1,k}(O).M\_SCAN_{t,i(k,Z)}(F).$$

On utilise ainsi une mesure de correspondance qui quantifie une correspondance entre une répartition spatiale (au sein des cellules) des vraisemblances d'occupation dans la grille de mesure et une répartition spatiale des vraisemblances d'occupation dans la grille fixe.

L'utilisation du dénominateur (1 - $M_{t,k,z}(C)$) permet de pondérer dans la somme des cellules pour lesquelles les informations utilisées au numérateur sont contradictoires afin d'en tenir compte à bon escient.

En variante, on pourrait utiliser, pour chaque terme de la somme mentionnée ci-dessus, un autre opérateur de fusion afin de combiner les masses $M\_GRI_{t-1,k}$ reçues du module de combinaison 18 (via le module de normalisation 20) et les masses $M\text{-}SCAN_{t,i(k,z)}$ reçues du module de conversion 14, par exemple un opérateur de fusion tel que ceux utilisés dans le cadre de la théorie de l'évidence (également dénommée théorie de Dempster-Shafer).

La valeur $X_t$ délivrée par le module de localisation 16 est donc dans ce cas la valeur de Z qui maximise la mesure N(Z) : X est tel que N(X) = $\max_Z$ N(Z).

Ceci est par exemple déterminé en pratique en calculant la mesure N(Z) pour une pluralité de positions Z. On note dans la suite $z_x$, $z_y$, $z_\theta$ respectivement l'abscisse, l'ordonnée et le cap définissant une position Z.

Selon une première possibilité de réalisation, on calcule la mesure N(Z) pour un ensemble (discret) de positions Z vérifiant :

$$| z_x - x_{t-1} | \le S_x, \ | z_y - y_{t-1} | \le S_y, \ | z_\theta - \theta_{t-1} | \le S_\theta$$

où $X_{t-1}$, $Y_{t-1}$, $\theta_{t-1}$ sont l'abscisse, l'ordonnée et le cap définissant la position $X_{t-1}$ déterminée à l'itération précédente (ou l'abscisse, l'ordonnée et le cap initiaux lors de l'itération t=1) et où $S_x$, $S_y$, $S_\theta$ sont des seuils prédéterminés.

En exprimant les coordonnées en nombre de pas de la grille fixe (les cellules étant ici de même taille dans la grille fixe et dans la grille de mesure) - ou en degrés pour le cap, on utilise par exemple $S_x = S_y = 5$ et $S_\theta = 10°$ et :

$$z_x \in \{ x_{t-1}\text{-}5 \ ; \ x_{t-1}\text{-}4 \ ; \ x_{t-1}\text{-}3 \ ; \ x_{t-1}\text{-}2 \ ; \ x_{t-1}\text{-}1 \ ; \ x_{t-1} \ ; \ x_{t-1}\text{+}1 \ ; \ x_{t-1}\text{+}2 \ ; \ x_{t-1}\text{+}3 \ ; \ x_{t-1}\text{+}4 \ ; \ x_{t-1}\text{+}5 \}$$

$$z_y \in \{ y_{t-1}\text{-}5 \ ; \ y_{t-1}\text{-}4 \ ; \ y_{t-1}\text{-}3 \ ; \ y_{t-1}\text{-}2 \ ; \ y_{t-1}\text{-}1 \ ; \ y_{t-1} \ ; \ y_{t-1}\text{+}1 \ ; \ y_{t-1}\text{+}2 \ ; \ y_{t-1}\text{+}3 \ ; \ y_{t-1}\text{+}4 \ ; \ y_{t-1}\text{+}5 \}$$

$$z_\theta \in \{ \theta_{t-1}\text{-}10° \ ; \ \theta_{t-1}\text{-}8° \ ; \ \theta_{t-1}\text{-}6° \ ; \ \theta_{t-1}\text{-}4° \ ; \ \theta_{t-1}\text{-}2° \ ; \ \theta_{t-1} \ ; \ \theta_{t-1}\text{+}2° \ ; \ \theta_{t-1}\text{+}4° \ ; \ \theta_{t-1}\text{+}6° \ ;$$
$$\theta_{t-1}\text{+}8° \ ; \ \theta_{t-1}\text{+}10° \},$$

soit un calcul de la mesure N(Z) pour 1331 positions possibles Z.

Selon une seconde possibilité de réalisation, on utilise une position a *priori* $X_{t|t-1} = (x_{t|t-1}, y_{t|t-1}, \theta_{t|t-1})$ dérivée de la position $X_{t-1}$ déterminée à l'itération précédente sur la base d'un modèle à vitesse constante :

$$\begin{pmatrix} X \\ \dot{X} \end{pmatrix}_{t|t-1} = \begin{pmatrix} 1 & \Delta t \\ 0 & 1 \end{pmatrix} \cdot \begin{pmatrix} X \\ \dot{X} \end{pmatrix}_{t-1}$$

où $\dot{X}_{t-1}$ est la dérivée de la position $X_{t-1}$ à l'instant t-1 : $\dot{X}_{t-1} = (\dot{x}.\dot{y}.\dot{\theta})_{t-1}$.

On peut alors calculer la mesure N(Z) pour un ensemble (discret) de positions Z vérifiant :

$$| z_x - x_{t|t-1} | \leq S_x, \; | z_y - y_{t|t-1} | \leq S_y, \; | z_\theta - \theta_{t|t-1} | \leq S_\theta$$

où $S_x$, $S_y$, $S_\theta$ sont des seuils prédéterminés.

En exprimant les coordonnées en nombre de pas de la grille fixe (les cellules étant ici de même taille dans la grille fixe et dans la grille de mesure), on utilise par exemple $S_x = S_y = 5$ et $S_\theta = 10°$ et :

$$z_x \in \{ \; x_{t|t-1}-5 \; ; \; x_{t|t-1}-4 \; ; \; x_{t|t-1}-3 \; ; \; x_{t|t-1}-2 \; ; \; x_{t|t-1}-1 \; ; \; x_{t|t-1} \; ; \; x_{t|t-1}+1 \; ; \; x_{t|t-1}+2 \; ; \; x_{t|t-1}+3 \; ; \; x_{t|t-1}+4 \; ; \; x_{t|t-1}+5 \; \}$$

$$z_y \in \{ \; y_{t|t-1}-5 \; ; \; y_{t|t-1}-4 \; ; \; y_{t|t-1}-3 \; ; \; y_{t|t-1}-2 \; ; \; y_{t|t-1}-1 \; ; \; y_{t|t-1} \; ; \; y_{t|t-1}+1 \; ; \; y_{t|t-1}+2 \; ; \; y_{t|t-1}+3 \; ; \; y_{t|t-1}+4 \; ; \; y_{t|t-1}+5 \; \}$$

$$z_\theta \in \{ \; \theta_{t|t-1}-10° \; ; \; \theta_{t|t-1}-8° \; ; \; \theta_{t|t-1}-6° \; ; \; \theta_{t|t-1}-4° \; ; \; \theta_{t|t-1}-2° \; ; \; \theta_{t|t-1} \; ; \; \theta_{t|t-1}+2° \; ; \; \theta_{t|t-1}+4° \; ; \; \theta_{t|t-1}+6° \; ;$$

$$\theta_{t|t-1}+8° \; ; \; \theta_{t|t-1}+10° \; \},$$

soit un calcul de la mesure N(Z) pour 1331 positions possibles Z autour de la position *a priori* $X_{t|t-1}$ déterminée sur la base d'un modèle à vitesse constante.

On pourra se référer à ce sujet à l'article "A real-time robust SLAM for large-scale outdoor environments", de J. Xie, F. Nashashibi, M. N. Parent et O. Garcia-Favrot in ITS World Congr. 2010.

La position $X_t$ déterminée par le module de localisation 16 est transmise au module de combinaison 18, qui reçoit également en entrée comme déjà indiqué les différentes masses $M\_SCAN_{t,i}(A)$ (avec $A \in \{O,F,U\}$) produites par le module de conversion 14 pour les différentes cellules i de la grille de mesure, ainsi que les différentes masses $M\_GRI_{t-1,k}(A)$ (avec $A \in \{O,F,U\}$) produites comme expliqué ci-dessus par le module de normalisation 20 à l'itération précédente t-1 pour les cellules k de la grille fixe.

Le module de combinaison 18 combine alors les informations fournies par le capteur 2 à l'instant t (représentées par les masses $M\_SCAN_{t,i}(A)$) et les informations construites par le dispositif 10 jusqu'à l'instant t-1 (représentées par les masses $M\_GRI_{t-1,k}(A)$) afin d'en déduire des masses brutes $M\_COMB_{t,k}(A)$ représentatives de l'état de la connaissance de la grille fixe à l'instant t, par exemple en appliquant à chaque cellule k de la grille fixe une formule du type :

$$M\_COMB_{t,k} = M\_GRI_{t-1,k} \; \boxed{\cap} \; M\_SCAN_{t,i(k,Xt)}$$

où $i(k,X_t)$ est la cellule de la grille de mesure qui correspond à la cellule k de la grille fixe lorsque le système est à la position $X_t$ et où $\boxed{\cap}$ est un opérateur de conjonction défini par exemple dans l'article "Credibilist occupancy grids for vehicle perception in dynamic environments", de J. Moras, V. Cherfaoui et P. Bonnifait in IEEE Int. Conf. Robot. Automat. (ICRA2011), pages 84-89, 2011.

En explicitant les calculs effectués du fait de cet opérateur $\boxed{\cap}$ , on obtient ainsi pour chaque cellule k :

- une masse brute d'occupation $M\_COMB_{t,k}(O)$, représentant la vraisemblance d'occupation de la cellule k, ici par :

$$M\_COMB_{t,k}(O) = M\_GRI_{t-1,k}(O).M\_SCAN_{t,i(k,Xt)}(O) + M\_GRI_{t-1,k}(U).M\_SCAN_{t,i(k,Xt)}(O)$$
$$+ M\_GRI_{t-1,k}(O).M\_SCAN_{t,i(k,Xt)}(U) \; ;$$

- une masse brute de non-occupation $M\_COMB_{t,k}(F)$, représentant la vraisemblance de non-occupation de la cellule k, ici par :

$$M\_COMB_{t,k}(F) = M\_GRI_{t-1,k}(F).M\_SCAN_{t,i(k,Xt)}(F) + M\_GRI_{t-1,k}(U).M\_SCAN_{t,i(k,Xt)}(F)$$
$$+ M\_GRI_{t-1,k}(F). M\_SCAN_{t,i(k,Xt)}(U) ;$$

- une masse brute de non-connaissance $M\_COMB_{t,k}(U)$, représentant la vraisemblance de non-connaissance de la cellule k, ici par :

$$M\_COMB_{t,k}(U) = M\_GRI_{t-1,k}(U).M\_SCAN_{t,i(k,Xt)}(U) ;$$

- une masse brute de conflit $M\_COMB_{t,k}(C)$, représentant une vraisemblance de conflit à propos de cette cellule k (entre l'information délivrée par le capteur 2 et l'information construite par le dispositif 10 jusqu'à l'instant t-1), ici par :

$$M\_COMB_{t,k}(C) = M\_GRI_{t-1,k}(F).M\_SCAN_{t,i(k,Xt)}(O) + M\_GRI_{t-1,k}(O).M\_SCAN_{t,i(k,Xt)}(F).$$

Pour chaque cellule k, la somme des différentes masses brutes relatives à cette cellule est égale à 1.

Les masses brutes $M\_COMB_{t,k}$ produites par le module de combinaison 18 sont transmises au module de normalisation 20 qui conserve (dans chaque cellule) la répartition des masses d'occupation, de non-occupation et de non-connaissance mais fait disparaître la notion de masse de conflit, ce qui permet de s'affranchir des obstacles mobiles. Selon un mode de réalisation envisageable, les masses brutes de conflit $M\_COMB_{t,k}(C)$ pour les différentes cellules k peuvent être mémorisées afin d'être utilisées en vue de la détection des obstacles mobiles.

Le module de normalisation 20 calcule ainsi les masses suivantes (après normalisation) :

$$M\_GRI_{t,k}(A) = M\_COMB_{t,k}(A)/(1 - M\_COMB_{t,k}(C)) \text{ pour tout } A \in \{O,F,U\}$$

et pour toutes les cellules k.

On obtient ainsi pour chaque cellule k une masse d'occupation $M\_GRI_{t,k}(O)$, une masse de non-occupation $M\_GRI_{t,k}(F)$ et une masse de non-connaissance $M\_GRI_{t,k}(U)$, qui constituent ici les informations de cartographie GRI délivrées par le dispositif 10. Grâce à la normalisation, pour chaque cellule k, la somme des différentes masses $M\_GRI_{t,k}(O)$, $M\_GRI_{t,k}(F)$, $M\_GRI_{t,k}(U)$ relatives à cette cellule est égale à 1.

On dénomme ici *"module de cartographie"* l'ensemble formé par le module de combinaison 18 et le module de normalisation 20.

On peut alors par exemple représenter ces informations sur une carte (affichée par exemple sur un écran de l'engin mobile), éventuellement en faisant apparaître chaque cellule k dans une couleur définie en fonction des masses $M\_GRI_{t,k}(O)$, $M\_GRI_{t,k}(F)$, $M\_GRI_{t,k}(U)$ relatives à cette cellule k ; on utilise par exemple pour une cellule k une couleur dont les coordonnées trichromatiques dans le repère RVB sont : $M\_GRI_{t,k}(O)$, $M\_GRI_{t,k}(F)$, $M\_GRI_{t,k}(U)$.

Comme déjà indiqué, les masses $M\_GRI_{t,k}$ produites en sortie du module de normalisation 20 sont transmises (à travers un retardateur d'une itération 22) au module de localisation 16 et au module de combinaison 18 afin d'y être utilisées à l'itération suivante.

## Revendications

1. Dispositif de localisation et de cartographie (10) destiné à équiper un engin mobile dans un environnement comprenant une pluralité de zones, comprenant :

   - un module de réception (11) conçu pour recevoir des données de positionnement $(d(\alpha))$ d'obstacles relativement à l'engin ;
   - un module de traitement (12, 14) conçu pour déterminer, en fonction des données de positionnement reçues $(d(\alpha))$ et pour une pluralité de zones positionnées par rapport à l'engin, des valeurs caractérisant la zone concernée, le dispositif étant **caractérisé en ce que**

le module de traitement détermine des valeurs de mesures ($M\_SCAN_{t,i}$) respectivement représentatives d'une vraisemblance d'occupation de la zone concernée, d'une vraisemblance de non-occupation de la zone concernée et d'une vraisemblance de non-connaissance de la zone concernée ;

et **en ce que** le dispositif comprend également :

- un module de cartographie (18, 20) conçu pour construire, pour chaque zone de ladite pluralité de zones de l'environnement, des valeurs construites ($M\_GRI_{t,k}$) respectivement représentatives d'une vraisemblance d'occupation de la zone concernée, d'une vraisemblance de non-occupation de la zone concernée et d'une vraisemblance de non-connaissance de la zone concernée ; et
- un module de localisation (16) conçu pour déterminer le positionnement de l'engin dans l'environnement qui maximise une mesure de correspondance entre les valeurs de mesure ($M\_SCAN_{t,i}$) et les valeurs construites ($M\_GRI_{t,k}$) et conçu pour déterminer la mesure de correspondance en utilisant une mesure de conflit entre les valeurs de mesure ($M\_SCAN_{t,i}$) et les valeurs construites ($M\_GRI_{t,k}$).

2. Dispositif de localisation et de cartographie selon la revendication 1 dans lequel la mesure de correspondance est indicative d'une correspondance entre une répartition spatiale des valeurs de mesure ($M\_SCAN_{t,i}$) représentatives de la vraisemblance d'occupation et une répartition spatiale des valeurs construites ($M\_GRI_{t,k}$) représentatives de la vraisemblance d'occupation.

3. Dispositif de localisation et de cartographie selon l'une des revendications 1 à 2, dans lequel le module de localisation (16) est conçu pour déterminer la mesure de correspondance pour un positionnement donné de l'engin mobile en utilisant une somme de termes associés chacun à une zone donnée de l'environnement, et pour calculer chaque terme en utilisant le produit de la valeur de mesure ($M\_SCAN_{t,i}$) représentative de la vraisemblance d'occupation de la zone correspondant à la zone donnée pour le positionnement donné de l'engin et de la valeur construite ($M\_GRI_{t,k}$) représentative de la vraisemblance d'occupation de la zone donnée.

4. Dispositif de localisation et de cartographie selon la revendication 3, dans lequel le module de localisation (16) est conçu pour calculer chaque terme en divisant le produit précité par un facteur de conflit utilisant une somme de la valeur de mesure ($M\_SCAN_{t,i}$) représentative de la vraisemblance d'occupation de la zone correspondant à la zone donnée pour le positionnement donné de l'engin, multipliée par la valeur construite ($M\_GRI_{t,k}$) représentative de la vraisemblance de non-occupation de la zone donnée, et de la valeur de mesure ($M\_SCAN_{t,i}$) représentative de la vraisemblance de non-occupation de la zone correspondant à la zone donnée pour le positionnement donné de l'engin, multipliée par la valeur construite ($M\_GRI_{t,k}$) représentative de la vraisemblance d'occupation de la zone donnée.

5. Dispositif de localisation et de cartographie selon l'une des revendications 1 à 4, dans lequel le module de cartographie (18, 20) comprend un module de combinaison (18) conçu pour déterminer pour chaque zone, en combinant lesdites valeurs de mesure ($M\_SCAN_{t,i}$) relatives à la zone concernée et des valeurs construites ($M\_GRI_{t-1,k}$) par le module de cartographie (18, 20) pour la zone concernée lors d'une précédente itération, des valeurs brutes ($M\_COMB_{t,k}$) respectivement représentatives d'une vraisemblance d'occupation de la zone concernée, d'une vraisemblance de non-occupation de la zone concernée, d'une vraisemblance de non-connaissance de la zone concernée et d'une vraisemblance de conflit sur la zone concernée.

6. Dispositif de localisation et de cartographie selon la revendication 5, dans lequel le module de cartographie (18, 20) comprend un module de normalisation (20) conçu pour déterminer lesdites valeurs construites ($M\_GRI_{t,k}$) en fonction desdites valeurs brutes ($M\_COMB_{t,k}$).

7. Dispositif de localisation et de cartographie selon l'une des revendications 1 à 6, dans lequel le module de traitement (12, 14) comprend un module de conversion (14) conçu pour déterminer, pour chaque zone de la pluralité de zones positionnées par rapport à l'engin, lesdites valeurs de mesure ($M\_SCAN_{t,i}$) relatives à la zone concernée en fonction de valeurs correspondantes ($M\_POLt,j$) attribuées, dans une grille polaire, à une cellule correspondant à la zone concernée.

8. Système comprenant un dispositif de localisation et de cartographie (10) selon l'une des revendications 1 à 7 et un capteur (2) conçu pour générer lesdites données de positionnement ($d(\alpha)$).

9. Système selon la revendication 8, dans lequel le capteur (2) est un lidar.

10. Procédé de localisation et de cartographie utilisé par un engin mobile dans un environnement comprenant une pluralité de zones, comprenant les étapes suivantes :

- réception de données de positionnement (d($\alpha$)) d'obstacles relativement à l'engin ;
- détermination, en fonction des données de positionnement reçues (d($\alpha$)) et pour une pluralité de zones positionnées par rapport à l'engin, de valeurs de mesure (M_SCAN$_{t,i}$) respectivement représentatives d'une vraisemblance d'occupation de la zone concernée, d'une vraisemblance de non-occupation de la zone concernée et d'une vraisemblance de non-connaissance de la zone concernée ;
- construction, pour chaque zone de ladite pluralité de zones de l'environnement, de valeurs construites (M_GRI$_{t,k}$) respectivement représentatives d'une vraisemblance d'occupation de la zone concernée, d'une vraisemblance de non-occupation de la zone concernée et d'une vraisemblance de non-connaissance de la zone concernée ;
- localisation de l'engin par détermination du positionnement de l'engin dans l'environnement qui maximise une mesure de correspondance entre les valeurs de mesure (M_SCAN$_{t,i}$) et les valeurs construites (M_GRI$_{t,k}$) et
- détermination de la mesure de correspondance en utilisant une mesure de conflit entre les valeurs de mesure (M_SCAN$_{t,i}$) et les valeurs construites (M_GRI$_{t,k}$).

11. Procédé selon la revendication 10, comprenant une étape de combinaison, pour chaque zone de l'environnement, desdites valeurs de mesure (M_SCAN$_{t,i}$) relatives à la zone concernée et de valeurs (M_GRI$_{t-1,k}$) construites par le module de cartographie pour la zone concernée lors d'une précédente itération afin de générer des valeurs brutes (M_COMB$_{t,k}$) respectivement représentatives d'une vraisemblance d'occupation de la zone concernée, d'une vraisemblance de non-occupation de la zone concernée, d'une vraisemblance de non-connaissance de la zone concernée et d'une vraisemblance de conflit sur la zone concernée.

12. Un programme d'ordinateur, comprenant des moyens de code de programme pour mettre en œuvre le procédé de l'une quelconque des revendications 10 à 11, lorsque ledit programme fonctionne sur un ordinateur.

13. Un produit de programme d'ordinateur, comprenant des moyens de code de programme, stocké sur un milieu lisible par un ordinateur, pour mettre en œuvre le procédé selon l'une quelconque des revendications 10 à 11, lorsque ledit programme fonctionne sur un ordinateur.

**Patentansprüche**

1. Lokalisierungs- und Kartierungsvorrichtung (10), die zur Ausstattung eines beweglichen Geräts in einer eine Vielzahl von Zonen enthaltenden Umgebung bestimmt ist, die enthält:

- ein Empfangsmodul (11), das konzipiert ist, Positionierungsdaten (d($\alpha$)) von Hindernissen bezüglich des Geräts zu empfangen;
- ein Verarbeitungsmodul (12, 14), das konzipiert ist, abhängig von den empfangenen Positionierungsdaten (d($\alpha$)) und für eine Vielzahl von bezüglich des Geräts positionierten Zonen die betreffende Zone kennzeichnende Werte zu bestimmen,

wobei die Vorrichtung **dadurch gekennzeichnet ist, dass** das Verarbeitungsmodul Werte von Messungen (M_SCAN$_{t,i}$) bestimmt, die für eine Belegungswahrscheinlichkeit der betreffenden Zone, eine Nichtbelegungswahrscheinlichkeit der betreffenden Zone bzw. eine Unkenntniswahrscheinlichkeit der betreffenden Zone repräsentativ sind;
und dass die Vorrichtung ebenfalls enthält:

- ein Kartierungsmodul (18, 20), das konzipiert ist, für jede Zone der Vielzahl von Zonen der Umgebung konstruierte Werte (M_GRI$_{t,k}$) zu konstruieren, die für eine Belegungswahrscheinlichkeit der betreffenden Zone, eine Nichtbelegungswahrscheinlichkeit der betreffenden Zone bzw. eine Unkenntniswahrscheinlichkeit der betreffenden Zone repräsentativ sind; und
- ein Lokalisierungsmodul (16), das konzipiert ist, die Positionierung des Geräts in der Umgebung zu bestimmen, die eine Korrespondenzmessung zwischen den Messwerten (M_SCAN$_{t,i}$) und den konstruierten Werten (M_GRI$_{t,k}$) maximiert, und konzipiert ist, die Korrespondenzmessung unter Verwendung einer Konfliktmessung zwischen den Messwerten ($M\_SCAN_{t,i}$) und den konstruierten Werten ($M\_GRI_{t,k}$) zu bestimmen.

2. Lokalisierungs- und Kartierungsvorrichtung nach Anspruch 1, wobei die Korrespondenzmessung eine Korrespondenz zwischen einer räumlichen Verteilung der für die Belegungswahrscheinlichkeit repräsentativen Messwerte ($M\_SCAN_{t,i}$) und einer räumlichen Verteilung der für die Belegungswahrscheinlichkeit repräsentativen konstruierten Werte ($M\_GRI_{t,k}$) anzeigt.

3. Lokalisierungs- und Kartierungsvorrichtung nach einem der Ansprüche 1 bis 2, wobei das Lokalisierungsmodul (16) konzipiert ist, die Korrespondenzmessung für eine gegebene Positionierung des beweglichen Geräts unter Verwendung einer Summe von Termen, die je einer gegebenen Zone der Umgebung zugeordnet sind, zu bestimmen, und jeden Term unter Verwendung des Produkts aus dem für die Belegungswahrscheinlichkeit der Zone, die der gegebenen Zone für die gegebene Positionierung des Geräts entspricht, repräsentativen Messwert ($M\_SCAN_{t,i}$) und dem für die Belegungswahrscheinlichkeit der gegebenen Zone repräsentativen konstruierten Wert ($M\_GRI_{t,k}$) zu berechnen.

4. Lokalisierungs- und Kartierungsvorrichtung nach Anspruch 3, wobei das Lokalisierungsmodul (16) konzipiert ist, jeden Term durch Dividieren des erwähnten Produkts durch einen Konfliktfaktor unter Verwendung einer Summe des für die Belegungswahrscheinlichkeit der der gegebenen Zone für die gegebene Positionierung des Geräts entsprechenden Zone repräsentativen Messwerts ($M\_SCAN_{t,i}$) multipliziert mit dem für die Nichtbelegungswahrscheinlichkeit der gegebenen Zone repräsentativen konstruierten Wert ($M\_GRI_{t,k}$) und des der für die Nichtbelegungswahrscheinlichkeit der der gegebenen Zone für die gegebene Positionierung des Geräts entsprechenden Zone repräsentativen Messwerts ($M\_SCAN_{t,i}$) multipliziert mit dem für die Belegungswahrscheinlichkeit der gegebenen Zone repräsentativen konstruierten Wert ($M\_GRI_{t,k}$) zu berechnen.

5. Lokalisierungs- und Kartierungsvorrichtung nach einem der Ansprüche 1 bis 4, wobei das Kartierungsmodul (18, 20) ein Kombinationsmodul (18) enthält, das konzipiert ist, für jede Zone durch Kombination der Messwerte ($M\_SCAN_{t,i}$) bezüglich der betreffenden Zone und durch das Kartierungsmodul (18, 20) für die betreffende Zone bei einer vorhergehenden Iteration konstruierter Werte ($M\_GRI_{t-1,k}$) Bruttowerte ($M\_COMB_{t,k}$) zu bestimmen, die für eine Belegungswahrscheinlichkeit der betreffenden Zone, eine Nichtbelegungswahrscheinlichkeit der betreffenden Zone, eine Unkenntniswahrscheinlichkeit der betreffenden Zone bzw. eine Konfliktwahrscheinlichkeit über die betreffende Zone repräsentativ sind.

6. Lokalisierungs- und Kartierungsvorrichtung nach Anspruch 5, wobei das Kartierungsmodul (18, 20) ein Normalisierungsmodul (20) enthält, das konzipiert ist, die konstruierten Werte ($M\_GRI_{t,k}$) abhängig von den Bruttowerten ($M\_COMB_{t,k}$) zu bestimmen.

7. Lokalisierungs- und Kartierungsvorrichtung nach einem der Ansprüche 1 bis 6, wobei das Verarbeitungsmodul (12, 14) ein Konvertierungsmodul (14) enthält, das konzipiert ist, für jede Zone der Vielzahl von bezüglich des Geräts positionierten Zonen die Messwerte ($M\_SCAN_{t,i}$) bezüglich der betreffenden Zone abhängig von entsprechenden Werten ($M\_POL_{t,i}$) zu bestimmen, die in einem Polargitter einer Zelle entsprechend der betreffenden Zone zugeordnet sind.

8. System, das eine Lokalisierungs- und Kartierungsvorrichtung (10) nach einem der Ansprüche 1 bis 7 und einen Sensor (2) enthält, der konzipiert ist, die Positionierungsdaten ($d(\alpha)$) zu erzeugen.

9. System nach Anspruch 8, wobei der Sensor (2) ein Lidar ist.

10. Verfahren zur Lokalisierung und Kartierung, das von einem beweglichen Gerät in einer eine Vielzahl von Zonen enthaltenden Umgebung verwendet wird, das die folgenden Schritte enthält:

- Empfang von Positionierungsdaten ($d(\alpha)$) von Hindernissen bezüglich des Geräts;
- Bestimmung, abhängig von den empfangenen Positionierungsdaten ($d(\alpha)$) und für eine Vielzahl von bezüglich des Geräts positionierten Zonen, von Messwerten ($M\_SCAN_{t,i}$), die für eine Belegungswahrscheinlichkeit der betreffenden Zone, eine Nichtbelegungswahrscheinlichkeit der betreffenden Zone bzw. eine Unkenntniswahrscheinlichkeit der betreffenden Zone repräsentativ sind;
- Konstruktion, für jede Zone der Vielzahl von Zonen der Umgebung, von konstruierten Werten ($M\_GRI_{t,k}$), die für eine Belegungswahrscheinlichkeit der betreffenden Zone, eine Nichtbelegungswahrscheinlichkeit der betreffenden Zone bzw. eine Unkenntniswahrscheinlichkeit der betreffenden Zone repräsentativ sind;

- Lokalisierung des Geräts durch Bestimmung der Positionierung des Geräts in der Umgebung, die eine Korrespondenzmessung zwischen den Messwerten ($M\_SCAN_{t,i}$) und den konstruierten Werten ($M\_GRI_{t,k}$) maximiert, und

- Bestimmung der Korrespondenzmessung unter Verwendung einer Konfliktmessung zwischen den Messwerten ($M\_SCAN_{t,i}$) und den konstruierten Werten ($M\_GRI_{t,k}$).

11. Verfahren nach Anspruch 10, das einen Schritt der Kombination, für jede Zone der Umgebung, der Messwerte ($M\_SCAN_{t,i}$) bezüglich der betreffenden Zone und von durch das Kartierungsmodul bei einer vorhergehenden Iteration für die betreffende Zone konstruierten Werten ($M\_GRI_{t-1,k}$) enthält, um Bruttowerte ($M\_COMB_{t,k}$) zu erzeugen, die für eine Belegungswahrscheinlichkeit der betreffenden Zone, eine Nichtbelegungswahrscheinlichkeit der betreffenden Zone, eine Unkenntniswahrscheinlichkeit der betreffenden Zone bzw. eine Konfliktwahrscheinlichkeit über die betreffende Zone repräsentativ sind.

12. Computerprogramm, das Programmcodeeinrichtungen enthält, um das Verfahren nach einem der Ansprüche 10 bis 11 durchzuführen, wenn das Programm auf einem Computer läuft.

13. Computerprogrammprodukt, das Programmcodeeinrichtungen enthält, gespeichert auf einem computerlesbaren Medium, um das Verfahren nach einem der Ansprüche 10 bis 11 durchzuführen, wenn das Programm auf einem Computer läuft.

## Claims

1. Locating and mapping device (10) intended to be fitted to a machine which is mobile in an environment comprising a plurality of areas, comprising:

- a receiving module (11) designed to receive data ($d(\alpha)$) on the positioning of obstacles relative to the machine;
- a processing module (12, 14) designed to determine, depending on the received positioning data ($d(\alpha)$) and for a plurality of areas positioned relative to the machine, values characterizing the area concerned, the device being **characterized in that** the processing module determines measurement values ($M\_SCAN_{t,i}$) representative, respectively, of a probability of the area concerned being occupied, of a probability of the area concerned being free and of a probability of the area concerned being unknown;

and **in that** the device also comprises:

- a mapping module (18, 20) designed to construct, for each area of said plurality of areas of the environment, constructed values ($M\_GRI_{t,k}$) representative, respectively, of a probability of the area concerned being occupied, of a probability of the area concerned being free and of a probability of the area concerned being unknown; and
- a locating module (16) designed to determine the positioning of the machine in the environment which maximizes a measure of the match between the measurement values ($M\_SCAN_{t,i}$) and the constructed values ($M\_GRI_{t,k}$) and designed to determine the match measurement by using a measure of conflict between the measurement values ($M\_SCAN_{t,i}$) and the constructed values ($M\_GRI_{t,k}$).

2. Locating and mapping device according to Claim 1, wherein the match measure is indicative of a match between a spatial distribution of the measurement values ($M\_SCAN_{t,i}$) which are representative of the probability of occupation and a spatial distribution of the constructed values ($M\_GRI_{t,k}$) which are representative of the probability of occupation.

3. Locating and mapping device according to either of Claims 1 and 2, wherein the locating module (16) is designed to determine the match measure for a given positioning of the mobile machine by using a sum of terms each associated with a given area of the environment, and to calculate each term by using the product of the measurement value ($M\_SCAN_{t,i}$) representative of the probability of the area corresponding to the given area being occupied for the given positioning of the machine and of the constructed value ($M\_GRI_{t,k}$) representative of the probability of the given area being occupied.

4. Locating and mapping device according to Claim 3, wherein the locating module (16) is designed to calculate each term by dividing the aforesaid product by a conflict factor using a sum of the measurement value ($M\_SCAN_{t,i}$)

representative of the probability of the area corresponding to the given area being occupied for the given positioning of the machine, multiplied by the constructed value ($M\_GRI_{t,k}$) representative of the probability of the given area being free, and of the measurement value ($M\_SCAN_{t,i}$) representative of the probability of the area corresponding to the given area being free for the given positioning of the machine, multiplied by the constructed value ($M\_GRI_{t,k}$) representative of the probability of the given area being occupied.

5. Locating and mapping device according to one of Claims 1 to 4, wherein the mapping module (18, 20) comprises a combination module (18) designed to determine, for each area, by combining said measurement values ($M\_SCAN_{t,i}$) relating to the area concerned and values ($M\_GRI_{t-1,k}$) constructed by the mapping module (18, 20) for the area concerned in a preceding iteration, raw values ($M\_COMB_{t,k}$) representative, respectively, of a probability of the area concerned being occupied, of a probability of the area concerned being free, of a probability of the area concerned being unknown and of a probability of conflict over the area concerned.

6. Locating and mapping device according to Claim 5, wherein the mapping module (18, 20) comprises a normalization module (20) designed to determine said constructed values ($M\_GRI_{t,k}$) depending on said raw values ($M\_COMB_{t,k}$).

7. Locating and mapping device according to one of Claims 1 to 6, wherein the processing module (12, 14) comprises a conversion module (14) designed to determine, for each area of the plurality of areas positioned relative to the machine, said measurement values ($M\_SCAN_{t,i}$) relating to the area concerned depending on corresponding values ($M\_POL_{t,i}$) assigned, in a polar grid, to a cell corresponding to the area concerned.

8. System comprising a locating and mapping device (10) according to one of Claims 1 to 7 and a sensor (2) designed to generate said positioning data ($d(\alpha)$).

9. System according to Claim 8, wherein the sensor (2) is a lidar.

10. Locating and mapping method used by a machine which is mobile in an environment comprising a plurality of areas, comprising the following steps:

    - receiving data ($d(\alpha)$) on the positioning of obstacles relative to the machine;
    - determining, depending on the received positioning data ($d(\alpha)$) and for a plurality of areas positioned relative to the machine, measurement values ($M\_SCAN_{t,i}$) representative, respectively, of a probability of the area concerned being occupied, of a probability of the area concerned being free and of a probability of the area concerned being unknown;
    - constructing, for each area of said plurality of areas of the environment, constructed values ($M\_GRI_{t,k}$) representative, respectively, of a probability of the area concerned being occupied, of a probability of the area concerned being free and of a probability of the area concerned being unknown;
    - locating the machine by determining the positioning of the machine in the environment which maximizes a measure of the match between the measurement values ($M\_SCAN_{t,i}$) and the constructed values ($M\_GRI_{t,k}$) and
    - determining the match measure by using a measure of conflict between the measurement values ($M\_SCAN_{t,i}$) and the constructed values ($M\_GRI_{t,k}$).

11. Method according to Claim 10, comprising a step of combining, for each area of the environment, said measurement values ($M\_SCAN_{t,i}$) relating to the area concerned and values ($M\_GRI_{t-1,k}$) constructed by the mapping module for the area concerned in a preceding iteration in order to generate raw values ($M\_COMB_{t,k}$) representative, respectively, of a probability of the area concerned being occupied, of a probability of the area concerned being free, of a probability of the area concerned being unknown and of a probability of conflict over the area concerned.

12. Computer program, comprising program code means for implementing the method of either of Claims 10 and 11, when said program is run on a computer.

13. Computer program product, comprising program code means, stored on a computer-readable medium, for implementing the method according to either of Claims 10 and 11, when said program is run on a computer.

**Fig.1**

LIDAR $\xrightarrow{d(\alpha)}$ PROC $\longrightarrow X_t$

PROC $\longrightarrow$ GRI

MEM

2   4   10   6

**Fig.2**

$\underline{11} \xrightarrow{d(\alpha)} \underline{12} \xrightarrow{M\_POL_{t,j}} \underline{14}$

$\underline{14} \xrightarrow{M\_SCAN_{t,i}}$

$\underline{18} \longrightarrow X_t$

$\underline{16} \xrightarrow{X_t} \underline{18} \xrightarrow{M\_COMB_{t,k}} \underline{20} \xrightarrow{M\_GRI_{t,k}}$ GRI

$Z^{-1}$

$M\_GRI_{t-1,k}$   22

**Fig.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Online localization and mapping with moving objects detection in dynamic outdoor environments. *IEEE 5th Internation Conférence on Intelligent Computer Communication and Processing, 2009, ICCP 2009,* 2009, 410-408
- **B. BOLZON ; F. PAYEUR.** Experimental study of data merging techniques for workspace modeling with uncertainty. *Proceedings of the 2005 IEEE International Workshop on Advanced Methods for Uncertainty Estimation in Measurement,* 13 Mai 2005, 14-19

- **J. MORAS.** Credibilist occupancy grids for vehicle perception in dynamic environments. *IEEE INTERNATIONAL CONFERENCE ON ROBOTICS AND AUTOMATION,* 2011
- **J. XIE, F. NASHASHIBI ; M. N. PARENT ; O. GARCIA-FAVROT.** A real-time robust SLAM for large-scale outdoor environments. *ITS World Congr,* 2010
- **J. MORAS ; V. CHERFAOUI ; P. BONNIFAIT.** Credibilist occupancy grids for vehicle perception in dynamic environments. *IEEE Int. Conf. Robot. Automat. (ICRA2011),* 2011, 84-89